# EUROPEAN PATENT SPECIFICATION

(11) **EP 4 520 434 B1**
(45) Date of publication and mention of the grant of the patent: **13.05.2026**
(21) Application number: 23290033.2
(22) Date of filing: 08.09.2023
(51) Int. Cl.: B02C 4/32, B02C 23/18, C04B 18/167, C04B 28/02, B02C 23/14, B02C 4/02

(54) **METHOD OF PROCESSING CONCRETE DEMOLITION MATERIAL INTO A PLURALITY OF PARTICLE SIZE FRACTIONS**
VERFAHREN ZUR VERARBEITUNG VON BETONZERKLEINERUNGSMATERIAL IN MEHRERE PARTIKELGRÖSSENFRAKTIONEN
PROCÉDÉ DE TRAITEMENT DE MATÉRIAU DE DÉMOLITION DE BÉTON EN UNE PLURALITÉ DE FRACTIONS DE TAILLE DE PARTICULE

(43) Date of publication of application: 12.03.2025
(73) Proprietor: Holcim Technology Ltd, 6300 Zug (CH)
(72) Inventor: Javelle, Olivier, 69720 Saint-Laurent-de-Mure (FR); Fittere, Michel, 69720 Saint-Laurent-de-Mure (FR); Guillin, Anthony, 69720 Saint-Laurent-de-Mure (FR); Marbec, Olivier, 69720 Saint-Laurent-de-Mure (FR)
(74) Representative: SONN Patentanwälte GmbH & Co KG

(56) References cited:
- EP-A1- 4 116 274
- CN-A- 113 769 819
- CN-B- 110 252 458
- CN-U- 219 377 259
- US-A1- 2020 123 054

## Description

The invention refers to a method of processing concrete demolition material into a plurality of particle size fractions.

The cement industry is an important emitter of CO₂. Within the cement production process, significant amounts of CO₂ are generated during the decarbonation of raw meal (containing CaCO₃) to lime (CaO). During the production of Portland cement clinker about 0.7 tons of CO₂ per ton of Portland cement clinker are emitted by the calcination of the raw materials and from the fuel combustion in the rotary kiln.

By substituting supplementary cementitious materials for Portland cement the specific emission of CO₂ in the production of cement can be reduced. Supplementary cementitious materials comprise a broad class of siliceous or siliceous and aluminous materials which, in finely divided form and in the presence of water, chemically react with calcium hydroxide at ordinary temperature to form compounds possessing cementitious properties. Examples of supplementary cementitious materials include granulated blast-furnace slag, fly ash, natural pozzolans, burnt oil shale, or calcined clay.

There have also been attempts to recycle concrete demolition materials so as to make them useable as a component of composite cements. The prior art in the field of construction and demolition materials management has predominantly focused on disposal methods, with a limited scope for high-value utilization. The generation of construction and demolition materials, particularly concrete, is extensive, leading to considerable environmental and logistical challenges. Traditional disposal methods, such as landfilling, are not only environmentally damaging but also economically inefficient due to the rising costs associated with landfill space. Furthermore, the current industry practice of using concrete demolition materials for low-value applications, such as road sub-base material, does not fully exploit the potential of this resource. There has been a growing interest in the reuse of concrete demolition materials as a supplementary cementitious material to partially replace cement in new cement and concrete production.

Prior art methods of separating concrete demolition material into multiple particle size fractions have involved various mechanical processes, including traditional crushers, ball mills, and hammer mills. While these systems can effectively segregate particles to some extent, they often suffer from various shortcomings.

One major drawback of conventional systems is their inability to differentiate between different components of the concrete. This means that valuable components, such as gravel, often undergo undue crushing, reducing their usability for certain applications where larger particle sizes are desired. This not only results in the loss of potential valuable aggregate but also increases the energy consumption due to unnecessary processing.

Furthermore, conventional methods often produce inconsistent particle sizes, resulting in fractions that may not meet the required standards for use as replacement materials. The uneven size distribution often necessitates further processing steps, increasing costs and resource consumption. Conventional methods of processing concrete demolition material are shown in documents CN110252458B, CN113769819A and CN219377259U.

Therefore, the present invention aims at providing a more efficient and precise approach to process concrete demolition material particles into a plurality of particle size fractions. In particular, the object is to enhance the reusability of demolition waste, thereby contributing to more sustainable construction practices.

To achieve these and other objects, the invention provides a method of processing concrete demolition material into a plurality of particle size fractions, comprising:
- providing particles of concrete demolition material,
- crushing the particles by means of a high-pressure grinding roll comprising a pair of counter-rotating rolls mounted in a frame, wherein one roll is a fixed roll fixed in a frame and the other roll is a floating or mobile roll positioned at a variable distance from the fixed roll by means of a hydraulic cylinder system, thereby obtaining a crushed material,
- screening the crushed material in order to obtain at least two, in particular at least three, particle size fractions, wherein the hydraulic cylinder system limits the maximum pressure exerted on the particles.

The invention provides a method for processing concrete demolition material into distinct particle size fractions using a high-pressure grinding roll configured with a fixed and a floating roll. This setup is specifically designed to ensure pure attrition grinding, which distinguishes it from conventional crushing mechanisms.

Utilizing a high-pressure grinding roll for the processing offers the advantage of a consistent and controlled grinding process. The pure attrition grinding ensures that the particle size reduction is achieved through surface abrasion, rather than compressive forces. This method maintains the structural integrity of the larger particles in the input material, preventing their fracture. In particular, this method minimizes that the virgin aggregates contained in the hardened concrete demolition material are further crushed while coming out of the process with a minimum amount of hardened cement paste attached to them. This allows the reuse of these recycled aggregates into new fresh concrete compositions without any negative effects, such as poor fresh concrete rheology or loss of compressive strength.

One of the technical features of this invention is the integration of a hydraulic cylinder system. This system adjusts the distance between the fixed and the floating roll, which in turn regulates the pressure exerted on the input material. By having the capability to limit the maximum pressure, the system ensures that larger particles, such as gravel and stones commonly found in demolition waste, remain uncrushed. This selectivity in crushing is pivotal in obtaining specific particle size fractions post-processing.

Preferably, the particles are subjected to a maximum pressure of 0.3 to 1 N/mm². This value can be measured using any known pressure sensor placed on the axis of the floating roll or cylinder.

The inclusion of the hydraulic cylinder system also results in reduced wear and tear on the grinding rolls. Since the system can adapt to diverse particle sizes by adjusting the pressure, the longevity of the equipment is potentially enhanced, leading to lower maintenance requirements.

Concrete demolition material is a complex mix of materials, primarily composed of cement paste, sand, and aggregates like gravel, or crushed stone. It can also contain reinforcing steel, gypsum, brick, glass, wood, and other materials depending on the original concrete structure and the demolition process. This waste is classified under different waste codes of the European Waste Catalogue (EWC) depending on its composition and potential contamination. The EWC is a hierarchical list of waste descriptions established by EU Commission decision 2000/532/EC2. Construction and demolition waste falls under chapter 17 of the EWC. Concrete demolition waste falls under sub-chapter 17 01 and comprises the following waste codes:
- 17 01 01: concrete
- 17 01 02: bricks
- 17 01 03: tiles and ceramics
- 17 01 06: mixtures of, or separate fractions of concrete, bricks, tiles and ceramics containing hazardous substances
- 17 01 07: mixtures of concrete, bricks, tiles and ceramics other than those mentioned in 17 01 06

Other sub-chapters comprise wood, glass and plastic (17 02), bituminous mixtures, coal tar and tarred products (17 03), metals (17 04), soil (17 05), and other fractions (17 06 - 17 09).

For the purpose of the instant invention, concrete demolition materials according to EWC waste code 17 01, in particular 17 01 01 and/or 17 01 07, may be used as input material.

In this connection, a preferred embodiment of the invention provides that the concrete demolition material, comprises:
- ≥ 90 wt.-% of concrete, concrete products, mortar, concrete masonry units, unbound aggregate, natural stone, and/or hydraulically bound aggregate; and
- ≤ 10 wt.-% of clay masonry units (i.e., bricks and tiles), calcium silicate masonry units, and/or aerated non-floating concrete.

In addition, the concrete demolition material may further comprise up to 20 wt.-% of contaminants (metals, wood, plastics, plasterboards, etc.).

As to the mineralogical composition of the concrete demolition material, a preferred embodiment of the invention provides that the concrete demolition material comprises ≥ 20 wt.-% calcite and ≤ 40 wt.-% quartz, measured by the XRD Rietveld method.

More specifically, the concrete demolition material may preferably comprise:
- 20-35 wt.-% silicates, such as quartz and feldspars (albite, anorthite, orthoclase, microcline),
- 25-45 wt.-% carbonates, such as calcite and dolomite,
- 25-35 wt.-% of an amorphous/microcrystalline fraction,
   and
- optionally 1-5 wt.-% sheet silicates, such as muscovite and biotite.

The particles of concrete demolition material fed to the high-pressure grinding roll, i.e the input material, may have a particle size in the range between a minimum particle size and a maximum particle size, the minimum particle size being 2-10 mm, such as 2 mm, and the maximum particle size being 20-50 mm, such as 50 mm.

Several parameters of the high-pressure grinding rolling process may be used in order to optimize the grinding process with a view to increase the selectivity of the subsequent screening step.

With respect to the configuration of the hydraulic cylinder system, a preferred embodiment provides that a precharge pressure of the hydraulic cylinder system is set at 50-70 bar. This results in a limitation of the maximum pressure exerted on the input material.

The gap between the fixed roll and the floating roll in the relaxed position of the hydraulic cylinder system is preferably set to 8-12 mm, preferably 10 mm.

Further, the rotation speed of the rolls is preferably set to 80-160 rpm, preferably 100-140 rpm. Setting the rotation speed within said range results in a favorable residence time of the material in the high-pressure grinding roll.

According to a preferred embodiment of the instant invention, the screening step is carried out in order to obtain a fine fraction having a particle size in the range of 0-4 mm, and at least one further fraction in the range of 4-30 mm.

For example, the screening step is carried out in order to obtain a fine fraction having a particle size in the range of 0-4 mm, a medium fraction having a particle size in the range of 4-10 mm and a coarse fraction having a particle size in the range of 10-30 mm.

The medium fraction and the coarse fraction may preferably be used as aggregates in a concrete composition.

The fine fraction may preferably be further separated into an ultra-fine fraction having a particle size in the range of 0-500 µm and a standard fine fraction having a particle size in the range of 500µm-4mm. Said separation may be carried out in an air separator, such as by means of a gravitational inertial air classifiers of the type AC30 from Metso Outotec Corporation.

The standard fine fraction may be used as a partial substitute to sand in a concrete or mortar composition. The ultra-fine fraction may be used as supplementary cementitious material in a composite cement, preferably after having been subjected to a re-carbonation step of contacting the ultra-fine fraction with a CO₂ containing gas.

Re-carbonation of ultra-fine fraction results in the formation of calcium carbonate (CaCO₃). When this material is introduced into new concrete mixes, it can react with the alkalis in the cement, enhancing its binding capacity and overall strength.

Another benefit of re-carbonation is that it allows concrete to act as a carbon sink. By absorbing CO₂ from the atmosphere during the carbonation process, the concrete demolition material helps offset a portion of the CO₂ emissions originally produced during cement manufacture.

Generally speaking, the carbonation is preferably conducted until the ultra-fine fraction has turned into a synthetic carbonated mineral component having pozzolanic properties. For example, the carbonation is conducted until the CaCO₃ content of the ultra-fine fraction has increased by least 5 wt.-%, preferably by at least 10 wt.-%, that is the CaCO₃ content of the ultra-fine fraction has increased from x% to (x+5)%, preferably from x% to (x+10)%.

Being a synthetic carbonated mineral component and due to its pozzolanic properties, the carbonated ultra-fine fraction can be used in cementitious compositions as a replacement material for Portland cement. In this way, the Portland clinker content and thus the CO₂ footprint of the composition may be reduced.

Depending on the effective pozzolanic activity of the carbonated ultra-fine fraction and other characteristics such as water demand, the clinker amount in the Portland cement can be adapted to produce the cement having the desired performance in terms of setting times and strength development.

The carbonated ultra-fine fraction can be used as is and blended in a CEM I, or optionally pre-ground prior to blending to reach a specific fineness, or co-ground with the other cement components.

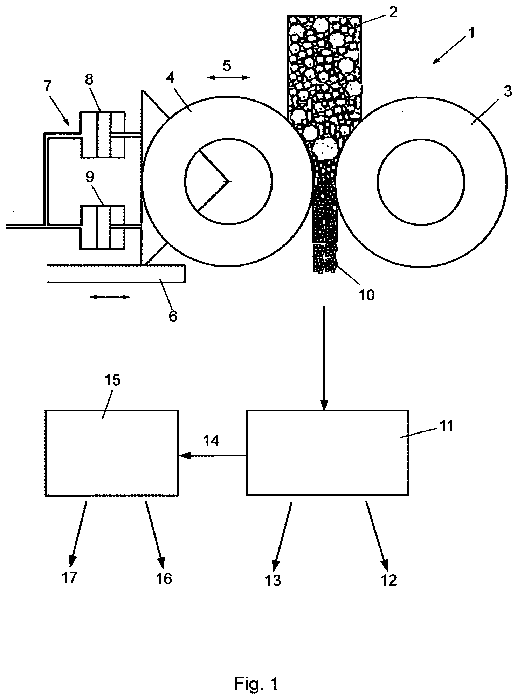

The invention will now be described in further detail with reference to an exemplary embodiment shown in the figures. Therein, fig. 1 shows a schematic layout of a device for carrying out the method according to the invention.

The device comprises a high-pressure grinding roll 1, to which an input material 2 is fed, which is ground between a fixed roll 3 and a floating roll 4. The floating roll 4 is arranged to be slidably guided along guiding means 6 according to double arrow **5.** Further, a hydraulic or pneumatic cylinder system 7 is provided for limiting the maximum pressure that the floating roll 4 can exert on the material to be crushed, wherein the cylinder system comprises two hydraulic or pneumatic cylinders 8 and 9 arranged in parallel.

The crushed material 10 is fed to a screener 11, in which the particles are separated into a coarse fraction 12, a medium fraction 13, and a fine fraction 14**.** The fine fraction 14 is introduced into an air separator 15, in which a further separation into a standard fine fraction 16, and an ultra fine fraction 17 is carried out.

## Claims

1. A method of processing concrete demolition material (2) into a plurality of particle size fractions, comprising:
- providing particles of concrete demolition material (2),
- crushing the particles by means of a high-pressure grinding roll (1) comprising a pair of counter-rotating rolls mounted in a frame, wherein one roll is a fixed roll (3) fixed in a frame and the other roll is a floating roll (4) positioned at a variable distance from the fixed roll (3) by means of a hydraulic cylinder system (7), thereby obtaining a crushed material (10),
- screening the crushed material (10) in order to obtain at least two, in particular at least three, particle size fractions (12,13,14);
and **characterized in that** the hydraulic cylinder system limits the maximum pressure exerted on the particles.

2. Method according to claim 1, wherein the particles are subjected to a maximum pressure of 0.3 to 1 N/mm².

3. Method according to claim 1 or 2, wherein a precharge pressure of the hydraulic cylinder system (7) is set at 50-70 bar.

4. Method according to claim 1, 2 or 3, wherein a gap between the fixed roll (3) and the floating roll (4) in the relaxed position of the hydraulic cylinder system (7) is set to 8-12 mm, preferably 10 mm.

5. Method according to any one of claims 1 to 4, wherein the rotation speed of the rolls (3,4) is set to 80-160 rpm, preferably 100-140 rpm.

6. Method according to any one of claims 1 to 5, wherein the particle size fractions comprise a fine fraction (14) having a particle size in the range of 0-4 mm, a medium fraction (13) having a particle size in the range of 4-10 mm and a coarse fraction (12) having a particle size in the range of 10-30 mm.

7. Method according to claim 6, wherein the fine fraction (14) comprises an ultra-fine fraction (17) having a particle size in the range of 0-500 µm and a standard fine fraction (16) having a particle size in the range of 500µm-4mm.

8. Method according to claim 7, wherein the method further comprises using the ultra-fine fraction (17) as supplementary cementitious material in a composite cement, preferably after having been subjected to a re-carbonation step of contacting the ultra-fine fraction with a CO₂ containing gas.

9. Method according to claim 6, 7 or 8, wherein the method further comprises using the standard fine fraction (16) as a partial substitute to sand in a concrete or mortar composition.

10. Method according to any one claims 6 to 9, wherein the method further comprises using the medium fraction (13) and the coarse fraction (12) as aggregates in a concrete composition.

11. Method according to any one of claims 1 to 10, wherein the particles of concrete demolition material (2) have a size in the range of 8 to 30 mm.

## Patentansprüche

1. Verfahren zur Verarbeitung von Betonabbruchmaterial (2) in eine Vielzahl von Partikelgrößenfraktionen, umfassend:
- Bereitstellen von Partikeln aus Betonabbruchmaterial (2),
- Zerkleinern der Partikel mittels einer Hochdruck-Rollenpresse (1), die ein Paar gegenläufiger, in einem Rahmen montierter Walzen umfasst, wobei eine Walze eine in einem Rahmen fixierte Festwalze (3) ist und die andere Walze eine Loswalze (4) ist, die mittels eines Hydraulikzylindersystems (7) in einem variablen Abstand zur Festwalze (3) positioniert ist, wodurch ein zerkleinertes Material (10) erhalten wird,
- Sieben des zerkleinerten Materials (10), um mindestens zwei, insbesondere mindestens drei, Partikelgrößenfraktionen (12, 13, 14) zu erhalten;
und **dadurch gekennzeichnet, dass** das Hydraulikzylindersystem den maximalen Druck, der auf die Partikel ausgeübt wird, begrenzt.

2. Verfahren nach Anspruch 1, wobei die Partikel einem maximalen Druck von 0,3 bis 1 N/mm² ausgesetzt werden.

3. Verfahren nach Anspruch 1 oder 2, wobei ein Vorladedruck des Hydraulikzylindersystems (7) auf 50-70 bar eingestellt wird.

4. Verfahren nach Anspruch 1, 2 oder 3, wobei ein Spalt zwischen der Festwalze (3) und der Loswalze (4) in der entspannten Position des Hydraulikzylindersystems (7) auf 8-12 mm, vorzugsweise 10 mm, eingestellt wird.

5. Verfahren nach einem der Ansprüche 1 bis 4, wobei die Drehzahl der Walzen (3, 4) auf 80-160 U/min, vorzugsweise 100-140 U/min, eingestellt wird.

6. Verfahren nach einem der Ansprüche 1 bis 5, wobei die Partikelgrößenfraktionen eine Feinfraktion (14) mit einer Partikelgröße im Bereich von 0-4 mm, eine Mittelfraktion (13) mit einer Partikelgröße im Bereich von 4-10 mm und eine Grobfraktion (12) mit einer Partikelgröße im Bereich von 10-30 mm umfassen.

7. Verfahren nach Anspruch 6, wobei die Feinfraktion (14) eine ultrafeine Fraktion (17) mit einer Partikelgröße im Bereich von 0-500 µm und eine Standard-Feinfraktion (16) mit einer Partikelgröße im Bereich von 500µm-4mm umfasst.

8. Verfahren nach Anspruch 7, wobei das Verfahren ferner das Verwenden der ultrafeinen Fraktion (17) als zementartigen Zusatzstoff in einem Kompositzement umfasst, vorzugsweise nachdem er einem Rekarbonatisierungsschritt des Inkontaktbringens der ultrafeinen Fraktion mit einem CO₂-haltigen Gas unterzogen wurde.

9. Verfahren nach Anspruch 6, 7 oder 8, wobei das Verfahren ferner das Verwenden der Standard-Feinfraktion (16) als teilweisen Ersatz für Sand in einer Beton- oder Mörtelzusammensetzung umfasst.

10. Verfahren nach einem der Ansprüche 6 bis 9, wobei das Verfahren ferner das Verwenden der Mittelfraktion (13) und der Grobfraktion (12) als Zuschlagstoffe in einer Betonzusammensetzung umfasst.

11. Verfahren nach einem der Ansprüche 1 bis 10, wobei die Partikel aus Betonabbruchmaterial (2) eine Größe im Bereich von 8 bis 30 mm aufweisen.

## Revendications

1. Procédé de traitement de matériau de démolition de béton (2) en une pluralité de fractions granulométriques, comprenant :
- la fourniture de particules de matériau de démolition de béton (2),
- le broyage des particules au moyen d'un broyeur à rouleaux à haute pression (1) comprenant une paire de rouleaux contre-rotatifs montés dans un châssis, dans lequel un rouleau est un rouleau fixe (3) fixé dans un châssis et l'autre rouleau est un rouleau flottant (4) positionné à une distance variable du rouleau fixe (3) au moyen d'un système de vérins hydrauliques (7), obtenant ainsi un matériau broyé (10),
- le tamisage du matériau broyé (10) afin d'obtenir au moins deux, en particulier au moins trois, fractions granulométriques (12, 13, 14) ;
et **caractérisé en ce que** le système de vérins hydrauliques (7) limite la pression maximale exercée sur les particules.

2. Procédé selon la revendication 1, dans lequel les particules sont soumises à une pression maximale de 0,3 à 1 N/mm².

3. Procédé selon la revendication 1 ou 2, dans lequel une pression de précharge du système de vérins hydrauliques (7) est réglée à 50-70 bar.

4. Procédé selon la revendication 1, 2 ou 3, dans lequel un écart entre le rouleau fixe (3) et le rouleau flottant (4) dans la position de repos du système de vérins hydrauliques (7) est réglé à 8-12 mm, de préférence à 10 mm.

5. Procédé selon l'une quelconque des revendications 1 à 4, dans lequel la vitesse de rotation des rouleaux (3, 4) est réglée à 80-160 tr/min, de préférence à 100-140 tr/min.

6. Procédé selon l'une quelconque des revendications 1 à 5, dans lequel les fractions granulométriques comprennent une fraction fine (14) ayant une taille de particule dans la plage de 0-4 mm, une fraction moyenne (13) ayant une taille de particule dans la plage de 4-10 mm et une fraction grossière (12) ayant une taille de particule dans la plage de 10-30 mm.

7. Procédé selon la revendication 6, dans lequel la fraction fine (14) comprend une fraction ultrafine (17) ayant une taille de particule dans la plage de 0-500 µm et une fraction fine standard (16) ayant une taille de particule dans la plage de 500µm-4mm.

8. Procédé selon la revendication 7, dans lequel le procédé comprend en outre l'utilisation de la fraction ultrafine (17) comme addition cimentaire dans un ciment composite, de préférence après qu'elle a été soumise à une étape de recarbonatation consistant à mettre en contact la fraction ultrafine avec un gaz contenant du CO₂.

9. Procédé selon la revendication 6, 7 ou 8, dans lequel le procédé comprend en outre l'utilisation de la fraction fine standard (16) comme substitut partiel du sable dans une composition de béton ou de mortier.

10. Procédé selon l'une quelconque des revendications 6 à 9, dans lequel le procédé comprend en outre l'utilisation de la fraction moyenne (13) et de la fraction grossière (12) comme granulats dans une composition de béton.

11. Procédé selon l'une quelconque des revendications 1 à 10, dans lequel les particules de matériau de démolition de béton (2) ont une taille dans la plage de 8 à 30 mm.
